(19) Europäisches Patentamt / European Patent Office / Office européen des brevets

(11) **EP 1 554 502 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(21) Anmeldenummer: **03773501.6**

(22) Anmeldetag: **10.10.2003**

(51) Int Cl.:
**F16D 48/06** *(2006.01)*          **F16H 61/02** *(2006.01)*

(86) Internationale Anmeldenummer:
**PCT/DE2003/003359**

(87) Internationale Veröffentlichungsnummer:
**WO 2004/036078 (29.04.2004 Gazette 2004/18)**

(54) **GETRIEBE UND VERFAHREN ZUM ANSTEUERN EINER KUPPLUNG, INSBESONDERE EINER DOPPELKUPPLUNG**

GEARBOX AND METHOD FOR CONTROLLING A CLUTCH, ESPECIALLY A DOUBLE CLUTCH

TRANSMISSION ET PROCEDE DE COMMANDE D'UN EMBRAYAGE, NOTAMMENT D'UN EMBRAYAGE DOUBLE

(84) Benannte Vertragsstaaten:
**AT BE BG CH CY CZ DE DK EE ES FI FR GB GR HU IE IT LI LU MC NL PT RO SE SI SK TR**

(30) Priorität: **16.10.2002 DE 10248156**

(43) Veröffentlichungstag der Anmeldung:
**20.07.2005 Patentblatt 2005/29**

(73) Patentinhaber: **LuK Lamellen und Kupplungsbau GmbH**
**77815 Bühl (DE)**

(72) Erfinder: **BAEHR, Markus**
**77855 Achern (DE)**

(56) Entgegenhaltungen:
**EP-A- 1 067 008**          **EP-A- 1 354 751**
**DE-A- 10 036 820**          **US-A- 5 407 401**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf ein Getriebe und ein Verfahren zum Ansteuern einer Kupplung, insbesondere einer Doppelkupplung, eines unterbrechungsfreien Schaltgetriebes, insbesondere eines Parallelschaltgetriebes.

Aus der Fahrzeugtechnik sind Getriebe und Verfahren zum Ansteuern einer Kupplung eines Getriebes hinreichend bekannt. Beispielsweise werden bei Fahrzeugen unterbrechungsfreie Schaltgetriebe, wie z. B. Doppelkupplungsgetriebe bzw. Parallelschaltgetriebe mit einer Doppelkupplung, welche mit zwei Teilgetrieben gekoppelt ist, verwendet.

Die US 5 407 401 A offenbart ein Parallelschaltgetriebe mit einer Doppelkupplung, bei der die beiden Kupplungen während einer Überschneidungsschaltung jeweils für sich angesteuert werden.

Die EP 1 067 008 A2 offenbart ein Verfahren zur Adaption von Kupplungskennlinien eines Doppelkupplungsgetriebes.

Bei einer Simulation einer Doppelkupplung, bei der beide Teil-Kupplungen an einem Kupplungsdeckel vorgesehen sind, hat sich gezeigt, dass ein deutliches Übersprechen bei der Momentensteuerung auftreten kann.

Der vorliegenden Erfindung liegt demnach die Aufgabe zugrunde, ein Getriebe und ein Verfahren zum Ansteuern einer Kupplung, insbesondere einer Doppelkupplung, eines unterbrechungsfreien Schaltgetriebes, insbesondere eines Parallelschaltgetriebes, der eingangs genannten Gattung vorzuschlagen, bei denen durch das Vorsehen einer geeigneten Ansteuerung der Kupplungsmomente insbesondere ein Übersprechen bei der Doppelkupplung vermieden wird.

Die Aufgabe der vorliegenden Erfindung kann durch ein erfindungsgemäßes Verfahren zum Ansteuern einer Kupplung, insbesondere einer Doppelkupplung, eines unterbrechungsfreien Schaltgetriebes, insbesondere eines Parallelschaltgetriebes, gelöst werden, wobei in Abhängigkeit der jeweiligen Basis-Momentenkennfelder jeder Kupplung ein gemeinsames Momentenkennfeld zum Ansteuern der Kupplungen erstellt wird. Somit kann ein vorzugsweise adaptierbares Kennfeld für die Doppelkupplungen des Getriebes realisiert werden.

Erfindungsgemäß können nachfolgend verschiedene Möglichkeiten angegeben werden, um Momentenkennfelder für die beiden Teil-Kupplungen bereitzustellen. In jedem Fall dienen die als Basiskennfelder bezeichneten Kennfelder der Einzelkupplungen als Grundlage. Diese können beispielsweise mit einer Reihe von Stützstellen den Verlauf des Kupplungsmomentes über der Aktorposition einer Kupplung wiedergeben, wenn z. B. die andere Teilkupplung kein Moment überträgt.

Im Rahmen einer Weiterbildung der Erfindung kann vorgesehen sein, dass die Basiskennfelder ($M_{RO1}$(Pos1) und $M_{RO2}$(Pos2)) z. B. während des Anfahrens und während der Synchronisationsphase bei Schaltungen bevorzugt getrennt adaptiert werden.

Gemäß einer nächsten Ausgestaltung können als Anforderungen an das jeweilige Kennfeld für die beiden Teil-Kupplungen beispielhaft folgende Anforderungen genannt werden.

Die Abweichung zwischen einem Kennfeld und dem tatsächlichen Kupplungsmoment soll möglichst klein sein, z. B. kleiner als 10 Nm. Ferner sollte die Möglichkeit bestehen, dass die Kennfelder vorzugsweise an Änderungen der Kupplungseigenschaften, welche beispielsweise durch unterschiedliche Parameter verursacht werden, wie Reibzahlveränderung, Verschleiß und Nachstellung oder dergleichen, angepasst werden. Darüber hinaus sollten die Kennfelder während des normalen Betriebs adaptiert werden. Je häufiger es möglich ist, die Kennfelder zu adaptieren, desto besser ist das Ergebnis.

Bei dem erfindungsgemäßen Verfahren kann das Übersprechen auf unterschiedliche Weise berücksichtigt werden. Zum einen kann das Übersprechen z. B. durch eine geeignete Momentenbeeinflußung verhindert werden. Hierbei können beispielsweise die Änderungen der Kupplungsmomente in Abhängigkeit von dem Moment der jeweils anderen Kupplung direkt berücksichtigt werden.

Eine andere Weiterbildung der Erfindung kann vorsehen, dass vorzugsweise mehrere Übersprechparameter angepasst werden. Um diese Parameter zu ermitteln, können z. B. die berechneten Werte für die Kupplungsmomente und die realen, gemessenen Kupplungsmomente miteinander verglichen werden. Dabei können bevorzugt aber immer Positionen verwendet werden, bei denen beide Kupplungen ein Moment übertragen, da sonst kein Übersprechen auftritt.

Eine nächste Ausgestaltung der vorliegenden Erfindung kann vorsehen, dass die Parameter $\alpha_0$ und $\beta_0$ in vorteilhafter Weise bei einer stark asymmetrischen Belastung der Kupplungen bestimmt werden, wohingegen für die Bestimmung der Parameter $\alpha_1$ und $\beta_1$ beide Kupplungen schleifend Moment überragen sollten.

Die Ermittlung der Parameter $\alpha_0$ und $\beta_0$ kann beispielsweise nach folgender Gleichung durchgeführt werden:

$$\alpha_0 = \frac{M_{RO1}(Pos1) - M_{R1}(Pos1, Pos2)}{M_{RO2}(Pos2)}$$

und

$$\beta_0 = \frac{M_{RO2}(Pos2) - M_{R2}(Pos1, Pos2)}{M_{Ro1}(Pos1)}$$

Aufgrund der Systemeigenschaften kann bei zwei schleifenden Kupplungen nur die Summe der übertragenen Kupplungsmomente gemessen werden. Daher können auch $\alpha_1$ und $\beta_1$ nur als Summe bestimmt werden. Dies kann z. B. wie folgt durchgeführt werden:

$$\alpha_1 + \beta_1 = \frac{(1 - \beta_0)M_{Ro1}(Pos1) + (1 - \alpha_0)M_{RO2}(Pos2) - (M_{R1} + M_{R2})}{M_{Ro1}(Pos1)M_{RO2}(Pos2)}$$

Es hat sich gezeigt, dass diese Summe vorzugsweise über

$$\alpha_1 = 0.5\left(\frac{\alpha_0}{(\alpha_0 + \beta_0)} + 0.5\right)(\alpha_1 + \beta_1) \text{ und } \beta_1 = 0.5\left(\frac{\beta_0}{(\alpha_0 + \beta_0)} + 0.5\right)(\alpha_1 + \beta_1)$$

auf die Einzelparameter aufgeteilt wird.

Nachfolgend wird die Durchführung der Adaption der Parameter $\alpha_0$ und $\beta_0$ beschrieben. Dabei wird zunächst die Tastpunktverschiebung durch das Übersprechen von der jeweils anderen Kupplung betrachtet.

Aufgrund des Übersprechens verschiebt sich der Tastpunkt an der Kupplung des ersten Teilgetriebes in negative Richtung, wenn die Kupplung des zweiten Teilgetriebes ein Moment überträgt. Die Position dieses Tastpunktes kann nun zur Berechnung des Momentes der Kupplung des ersten Teilgetriebes verwendet werden. Das reale Moment und auch das Moment an der Kupplung des zweiten Teilgetriebes ist bekannt. Somit kann der Parameter $\alpha_0$ berechnet werden. Für die Ermittlung des Parameters $\beta_0$ kann das Verfahren mit "vertauschten Rollen" durchgeführt werden.

Bei dem erfindungsgemäßen Verfahren können die Aktorpositionen vorzugsweise aus den Sollmomenten berechnet werden. Neben der Modellierung der Momente aus den Aktorpositionen kann auch die Ermittlung der Aktorpositionen aus den Sollmomenten erforderlich sein. Dabei können bevorzugt in einem ersten Schritt die Basismomente ($M_{RO1}$ und $M_{RO2}$) berechnet werden, aus denen dann über die inversen Basiskennfelder die Positionen ermittelt werden können.

Des weiteren kann ein Übersprechen durch eine geeignete Tastpunktverschiebung oder dergleichen bei dem erfindungsgemäßen Verfahren berücksichtigt werden. Dabei kann angenommen werden, dass die Veränderung der Momentenkennfelder der Einzelkupplungen einfach durch eine Verschiebung der Tastpunkte der beiden Teilkupplungen verursacht wird. Daher werden hier für die Berechnung der Kennfelder einfach die Basiskennfelder verschoben: Die Verschiebung kann z. B. proportional zum Moment an der jeweils anderen Kupplung erfolgen. Es ist auch denkbar, eine andere Art der Verschiebung durchzuführen.

Als Proportionalitätsparameter werden $A_1$ und $A_2$ verwendet. In einem ersten Schritt kann die Berechnung der Momente iterativ verbessert werden:

$$M_{1\_(i+1)} = M_{RO1}(Pos1 - A_1 M_{2\_(i)}) \quad \text{und} \quad M_{2\_(i+1)} = M_{RO2}(Pos2 - A_2 M_{1\_(i)})$$

Hierbei kann schon eine zweite Iteration für eine deutliche Verbesserung der Ergebnisse ausreichen. Nach spätestens vier Iterationen sind nur noch marginale Veränderungen der berechneten Momente feststellbar. Für Adaption sollte nun einfach die durch die jeweils andere Kupplung verursachte Tastpunktverschiebung ermittelt werden.

$$A_1 = \frac{\Delta TP_1}{M_{R2}} \quad \text{und} \quad A_2 = \frac{\Delta TP_2}{M_{R1}}$$

Gemäß einer nächsten Weiterbildung kann bei einer normalen Tastpunktadaption das Leerlaufmoment des Motors beobachtet werden, während z. B. die Kupplung des ersten Teilgetriebes geschlossen wird. Die jeweils andere Teil-Kupplung der Doppelkupplung überträgt dabei aber kein Moment. Es ist jedoch möglich, dass sich die Kupplung des zweiten Teilgetriebes in dem Neutralzustand befindet bzw. in diesen gebracht wird. Dann kann auch die dazugehörige andere Kupplung geschlossen werden. Über die adaptierten Basiskennfelder ($M_{RO2}$(Pos2)) ist das Moment der Kupplung des zweiten Teilgetriebes bekannt.

Nun kann z. B. durch Beobachtung des Leerlaufmoments des Verbrennungsmotors die Tastpunktposition ermittelt werden. Für die Kupplung mit der angefahren wird, z. B. die Kupplung des ersten Teilgetriebes, stellt dies kein Problem dar, da deren Gang eingelegt bleibt. Für die Ermittlung der Tastpunktverschiebung der Kupplung des zweiten Teilgetriebes, mit der nicht angefahren wird, kann die Kupplung zum Anfahren geöffnet und der Gang eingelegt werden, bevor der Anfahrvorgang begonnen wird.

Beispielsweise kann bei einem aufgebockten Fahrzeug, wenn die Antriebsräder ohne Bodenkontakt sind, ähnlich wie bei der Tastpunktadaption die Tastpunktverschiebung ohne die Verwendung von Eingangswellendrehzahlsensoren ermittelt werden. Hierzu wird bei laufendem (Leerlauf) Verbrennungsmotor und, wenn in beiden Teilgetriebe ein Gang eingelegt ist, zunächst die Kupplung des ersten Teilgetriebes bei einem hohen Reibmoment geschlossen. Dadurch fangen die Räder an zu drehen. Wenn nun die Kupplung des zweiten Teilgetriebes vorsichtig geschlossen wird, ergibt sich bei der Momentübertragung eine Verspannung im Getriebe, welche sich bremsend auf den Verbrennungsmotor auswirkt. Somit kann der Tastpunkt wie bei der Tastpunktadaption am Leerlaufmoment des Motors erkannt werden. Dieses Verfahren kann z. B. am Bandende in einem Herstellungswerk bevorzugt zum Einsatz kommen.

Es ist gemäß einer Weiterbildung der Erfindung auch möglich, dass zur Ermittlung einer Tastpunktverschiebung zumindest ein Eingangswellendrehzahlsensor verwendet wird. Falls im verwendeten Getriebe Eingangswellendrehzahlsensoren vorhanden sind, z. B. bei einer Schlupfregelung, können diese genutzt werden, um die Verschiebungen der Tastpunkte zu ermitteln.

Hierzu wird während des Fahrens in einen Gang z. B. des ersten Teilgetriebes, bei dem die entsprechende Kupplung ein bekanntes Moment überträgt, das andere, zweite Teilgetriebe in Neutral geschaltet. Nun kann beim Schließen der anderen Kupplung am Eingangswellendrehzahlsensor das Schließen der Kupplung erkannt werden, und so die Verschiebung des Tastpunktes ermittelt werden.

Im weiteren kann bei dem erfindungsgemäßen Verfahren auch eine Basisinitialisierung bei Systemen mit einer Schlupfregelung vorgesehen sein. Da eine Veränderung des übertragbaren Moments bei der einen Kupplung jeweils das Moment an der anderen Kupplung beeinflusst, kann diese Beeinflussung bei Systemen mit Schlupfregelung auch direkt genutzt werden. Beispielsweise kann beim Fahren mit der Kupplung des ersten Teilgetriebes die andere Kupplung in den Neutral gebracht werden. So kann dann die andere Kupplung geschlossen werden. Dieses Schließen der anderen Kupplung führt zu einer Verschiebung der Kennlinie der Kupplung des ersten Teilgetriebes. Diese Verschiebung der Kennlinie wird durch die Schlupfregelung ausgeglichen. Somit kann die Verschiebung durch die Schlupfregelung gemessen werden. Diese Verschiebung entspricht dabei genau der Verschiebung des Tastpunkts.

Ferner wird die Berücksichtigung der Reibwerte auf das Übersprechen beschrieben.

Die Modellierung der Kupplungskennlinien kann noch weiter verbessert werden. Entsprechend der Realität sind nicht die Momente der einen Kupplung für die Veränderung der Kennlinie der jeweils anderen Kupplung verantwortlich, sondern die Abstützkräfte am Kupplungsdeckel. Damit verändern sich die Übersprechparameter $A_1$ und $A_2$ mit den Reibwerten ($p_1$, $p_2$) der einzelnen Kupplungen.

$$A_1 \rho_1 = \text{const.} \quad \text{und} \quad A_2 \rho_1 = \text{const.}$$

Diese Beziehungen berücksichtigen jedoch nicht Einflüsse durch den Verschleiß der Kupplungen, die sich über veränderte Betätigungskräfte auf das Übersprechen auswirken. Dennoch können kurzfristige Änderungen der Reibwerte wie folgt für die Übersprechparameter berücksichtigt werden.

$$A_{1\_neu} = \frac{\rho_{2\_alt}}{\rho_{2\_neu}} A_{1\_alt} \quad \text{und} \quad A_{2\_neu} = \frac{\rho_{1\_alt}}{\rho_{1\_neu}} A_{2\_alt}$$

Damit kann die Zeit zwischen den Adaptionen der Übersprechparameter überbrückt werden. Insgesamt kann das erfindungsgemäße Verfahren weiter verbessert werden, indem beim Übersprechen durch die Tastpunktverschiebung zumindest ein Reibwert einer Kupplung berücksichtigt wird.

Bei einem Vergleich der verschiedenen Methoden zur Berücksichtigung des Übersprechens kann festgestellt werden, dass die Methode, bei der die Überschneidung durch die Tastpunktverschiebungen durchgeführt wird, deutlich einfacher in der Handhabung ist. Dies ist schon daran zu erkennen, dass nur zwei oder gar nur ein zusätzlicher Parameter zu adaptieren sind bzw. ist. Zudem ist keine Adaption in Situationen erforderlich, in denen beide Kupplungen ein relativ großes Moment übertragen. Auch die Berechnung der Sollpositionen aus den Sollmomenten ist deutlich einfacher. Auf der anderen Seite ist die Beschreibung des Übersprechens durch die direkte Momentenbeeinflussung allgemeiner.

Die erfindungsgemäßen Strategien können im allgemeinen bei PSG-Systemen mit Doppelkupplungen mit nur einem Kupplungsdeckel zum Einsatz kommen. In Doppelkupplungen ist immer mit einer mechanischen Kopplung zwischen den beiden Kupplungen zu rechnen. Möglicherweise ist ein genaues Modellieren der Kupplungsmomente während der Überschneidung nicht erforderlich, da diese entweder viel zu kurz ist, um Abweichungen in den Kupplungsmomenten zu bemerken. Andererseits besteht auch die Möglich die Abweichungen geeignet auszuregeln.

Die der Erfindung zugrundeliegende Aufgabe wird auch durch ein unterbrechungsfreies Schaltgetriebe, insbesondere ein Parallelschaltgetriebe, für ein Fahrzeug mit einer Doppelkupplung, insbesondere zum Durchführen des vorgeschlagenen Verfahrens, gelöst, wobei zumindest eine Ansteuereinrichtung vorgesehen ist, welche in Abhängigkeit der jeweiligen Basis-Momentenkennfelder jeder Kupplung ein gemeinsames Momentenkennfeld zum Ansteuern der Doppelkupplungen erstellt.

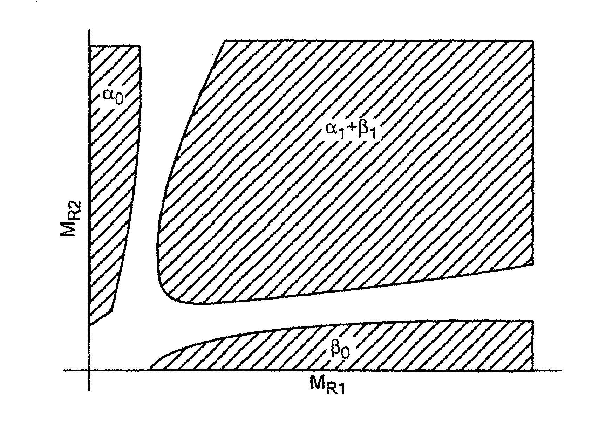

Weitere Vorteile und vorteilhafte Ausgestaltungen ergeben sich aus den Unteransprüchen und der nachfolgend beschriebenen Zeichnung. Die einzige Figur der vorliegenden Erfindung zeigt einen Überblick über die Bereiche für die Bestimmung der unterschiedlichen nachfolgend näher beschriebenen Parameter in einer Momentenkarte gemäß der vorliegenden Erfindung.

Erfindungsgemäß werden zwei Möglichkeiten angegeben, um Momentenkennfelder für die beiden Teilkupplungen bereitzustellen. In beiden Fällen dienen die im weiteren als Basiskennfelder bezeichneten Kennfelder der Einzelkupplungen als Grundlage.

Vorzugsweise können aus den Kennfeldtabellen für die Teil-Kupplung des ersten Teilgetriebes

| $Pos1_{\_1}$ | $Pos1_{\_2}$ | ... | $Pos1_{\_n}$ |
|---|---|---|---|
| $M_{RO1\_1}$ | $M_{RO1\_2}$ | ... | $M_{RO1\_n}$ |

und für die Teil-Kupplung des zweiten Teilgetriebes

| $Pos2_{\_1}$ | $Pos2_{\_2}$ | ... | $Pos2_{\_n}$ |
|---|---|---|---|
| $M_{RO2\_1}$ | $M_{RO2\_2}$ | ... | $M_{RO2\_n}$ |

bevorzugt über eine lineare Interpolation Funktionen angegeben werden, die aus gegebenen Aktorpositionen (Pos1 und Pos2) Kupplungsmomente berechnen:

$M_{RO1}(Pos1)$ und $M_{RO2}(Pos2)$

Diese Tabellen können auf dieselbe Weise aber auch genutzt werden, um aus einem geforderten Moment die erforderliche Aktorposition zu berechnen:

$L_1(M1)$ und $L_2(M2)$

Die Basiskennfelder ($M_{RO1}(Pos1)$ und $M_{RO2}(Pos2)$) können während des Anfahrens und während der Synchronisationsphase bei Schaltungen bevorzugt getrennt adaptiert werden.

Das Übersprechen kann auf zwei unterschiedliche Arten berücksichtigt werden.

Zum einen kann ein Übersprechen durch Momentenbeeinflußung berücksichtigt werden. Hierbei können die Änderungen der Kupplungsmomente in Abhängigkeit von dem Moment an der anderen Kupplung direkt berücksichtigt werden. Für die berechneten Momente ($M_1(Pos1, Pos2)$ und $M_2(Pos1, Pos2)$) ergibt sich:

$$M_1\left(Pos1, Pos2\right) = M_{RO1}\left(Pos1\right) - \alpha_0 M_{RO2}\left(Pos2\right) - \alpha_1 M_{RO1}\left(Pos1\right)M_{RO2}\left(Pos2\right)$$

und

$$M_2\left(Pos1, Pos2\right) = M_{RO2}\left(Pos2\right) - \beta_0 M_{Ro1}\left(Pos1\right) - \beta_1 M_{RO1}\left(Pos1\right)M_{RO2}\left(Pos2\right).$$

Danach können noch die vier Übersprechparameter $\alpha_0, \alpha_1, \beta_0$ und $\beta_1$ angepasst werden. Um diese Parameter zu ermitteln, können die berechneten Werte für die Kupplungsmomente ($M_1(Pos1, Pos2)$ und $M_2(Pos1, Pos2)$) und die realen, gemessenen Kupplungsmomente ($M_{R1}(Pos1, Pos2)$ und $M_{R2}(Pos1, Pos2)$) verglichen werden. Dabei sollten aber immer Positionen verwendet werden, bei denen beide Kupplungen ein Moment übertragen, da sonst kein Übersprechen auftritt.

Im weiteren werden auch Methoden für die Ermittlung der Tastpunktverschiebung behandelt. Beispielsweise wird eine Reduktion des Summenmomentes bevorzugt am Anfang und am Ende einer Überblendschaltung vorgesehen. Das Summenmoment kann im Fall, wenn beide Kupplungen schlupfen bei bekanntem Motormoment aus der Drehzahländerung des Motors ermittelt werden.

$$M_1 + M_2 = (1-\alpha_0)M_{RO2}(Pos2) + (1-\beta_0)M_{RO1}(Pos1)$$

Für den Fall

$$M_{RO2}(Pos2) \gg M_{RO1}(Pos1),$$

welches beispielsweise am Anfang einer 2→1 Überblendung oder am Ende einer 1→2 Überblendung vorkommt, kann der Term $\beta_0 M_{RO1}(Pos1)$ vernachlässigt werden. Wenn nun das gemessene Summenmoment

$$M_{R1}(Pos1, Pos2) + M_{R2}(Pos1, Pos2)$$

mit dem berechneten Moment gleichgesetzt wird, ergibt sich

$$M_{R1} + M_{R2} = M_{RO1}(Pos1) + M_{Ro2}(Pos2) - \alpha_0 M_{RO2}(Pos2).$$

Daraus ergibt sich für den Übersprechparameter $\alpha_0$ :

$$\alpha_0 = \frac{M_{RO2}\left(Pos2\right) + M_{RO1}\left(Pos1\right) - \left(M_{R1} + M_{R2}\right)}{M_{RO2}\left(Pos2\right)}$$

Der Betrag von $\beta_0$ kann analog ermittelt werden.

Ferner wird die Summe $\alpha_1 + \beta_1$ bestimmt. Auch hier sollte das Summenmoment beider Kupplungen ausgewertet werden. Allerdings ist das Summenmoment in der Mitte der Überblendung ausschlaggebend. Das Summenmoment kann in dem Fall, wenn beide Kupplungen schlupfen bei bekanntem Motormoment aus der Drehzahländerung des Motors ermittelt werden. Die ermittelten Parameter sind anhand der Momentenkarte in der Figur angedeutet.

Nachfolgend werden die Aktorpositionen aus den Sollmomenten berechnet. Neben der Modellierung der Momente aus den Aktorpositionen ist auch die Ermittlung der Aktorpositionen aus den Sollmomenten erforderlich. Dabei können bevorzugt in einem ersten Schritt die Basismomente ($M_{RO1}$ und $M_{RO2}$) berechnet werden, aus denen dann über die inversen Basiskennfelder die Positionen ermittelt werden können.

Aus den folgenden Gleichungen

$$A = \alpha_0\beta_1 + \alpha_1; \ B = \beta_1 M_1 - \alpha_1 M_2 + \alpha_0\beta_0 - 1 \ und \ C = M_1\beta_0 + M_2$$

ergibt sich

$$M_{RO2} = \frac{-B - \sqrt{B^2 - 4AC}}{2A} \quad und \quad M_{RO1} = \frac{M_1 + \alpha_0 M_{RO2}}{1 - \alpha_1 M_{RO2}}.$$

Daraus können dann über die Kennfeldfunktionen $L_1()$ und $L_2()$ die erforderlichen Aktorpositionen berechnet werden.

Des weiteren kann ein Übersprechen durch eine geeignete Tastpunktverschiebung berücksichtigt werden. Dabei kann angenommen werden, dass die Veränderung der Momentenkennfelder der Einzelkupplungen einfach durch eine Verschiebung der Tastpunkte der beiden Teilkupplungen verursacht wird. Daher werden hier für die Berechnung der Kennfelder einfach die Basiskennfelder verschoben: Die Verschiebung kann z. B. proportional zum Moment an der jeweils anderen Kupplung erfolgen. Es ist auch denkbar, eine andere Art der Verschiebung durchzuführen.

Die Berechnung der Kennfelder kann mittels einer einfachen Verschiebung der Basiskennfelder $M_{RO1}$ (Fos1) und $M_{RO2}$ (Post2) erfolgen.

$$M_1 = M_{RO1}(Pos1 - \Delta TP1) \quad und \quad M_2 = M_{RO2}(Pos2 - \Delta TP2),$$

wobei durch die Proportionalität gilt:

$$M_1 = M_{RO1}(Pos1 - A_1 M_{R2}(Pos1, Pos2)) \ und \ M_2 = M_{RO2}(Pos2 - A_2 M_{R1}(Pos1, Pos2))$$

Da aber für die Modellierung die realen Momente $M_{R1}(Pos1, Pos2)$ und $M_{R2}(Pos1, Pos2)$ nicht bekannt sind, wird zunächst von

$$M_{1\_1} = M_{RO1}(Pos1 - A_1 M_{RO2}(Pos2)) \quad und \quad M_{2\_1} = M_{RO2}(Pos2 - A_2 M_{RO1}(Pos1))$$

ausgegangen. Dabei sind $A_1$ und $A_2$ die Proportionalitätsparameter. Ausgehend von diesem ersten Schritt kann die Berechnung der Momente iterativ verbessert werden:

$$M_{1\_(i+1)} = M_{RO1}(Pos1 - A_1 M_{2\_(i)}) \quad und \quad M_{2\_(i+1)} = M_{RO2}(Pos2 - A_2 M_{1\_(i)})$$

Hierbei kann schon eine zweite Iteration für eine deutliche Verbesserung der Ergebnisse ausreichen. Nach spätestens vier Iterationen sind nur noch marginale Veränderungen der berechneten Momente feststellbar. Für Adaption sollte nun einfach die durch die jeweils andere Kupplung verursachte Tastpunktverschiebung ermittelt werden.

$$A_1 = \frac{\Delta TP_1}{M_{R2}} \quad \text{und} \quad A_2 = \frac{\Delta TP_2}{M_{R1}}$$

Des weiteren wird die Berechnung der Kupplungsmomente aus den Aktorpositionen beschrieben. Dabei können folgende Größen vorgegeben sein:

| | Pos 1 | Pos2 |
|---|---|---|
| Aktorpositionen: | Pos 1 | Pos2 |
| Kennfeldfunktionen: | $M_{RO1}()$ | $M_{RO2}()$ |
| Übersprechparameter: | $A_1$ | $A_2$ |

Gesucht sind folgende Größen:

| | | |
|---|---|---|
| Kupplungsmomente: | $M_1$ | $M_2$ |

Die Berechnung kann als ersten Schritt 1 umfassen:

$$M_{1\_0} = M_{RO1}(Pos1) \qquad \text{und} \qquad M_{2\_0} = M_{RO2}(Pos2)$$

Danach folgt die erste Iteration 1:

$$M_{1\_1} = M_{RO1}(Pos1 - A_1 M_{2\_0}) \qquad \text{und} \qquad M_{2\_1} = M_{RO2}(Pos2 - A_2 M_{1\_0})$$

Möglicherweise können weitere Iterationen folgen:

$$M_{1\_i+1} = M_{RO1}(Pos1 - A_1 M_{2\_i}) \qquad \text{und} \qquad M_{2\_i+1} = M_{RO2}(Pos2 - A_2 M_{1\_i})$$

In vorteilhafter Weise konvergiert das Verfahren derart gut, dass ein oder zwei Iterationsschritte eine ausreichende Genauigkeit ergeben. Daraus ergeben sich vier oder sechs Interpolationsrechnungen eines Basiskennfeldes.

In dem Fall, wenn nicht beide Kupplungen ein Moment übertragen, kann es ausreichend sein, eine Interpolationsrechnung für die Berechnung des Moments an der aktiven Kupplung durchzuführen.

Ferner wird eine Berechnung der Aktorpositionen aus den Sollmomenten beschrieben. Dabei können folgende Größen vorgegeben sein:

| | | |
|---|---|---|
| Sollmomente: | $M_1$ | $M_2$ |
| Kennfeldfunktionen: | $L_1()$ | $L_2()$ |
| Übersprechparameter: | $A_1$ | $A_2$ |

Dann werden die Aktorpositionen
Pos1 Pos2
gesucht.

Die Berechnung kann wie folgt durchgeführt werden:

$$Pos1 = L_1(M_1) + A_1 M_2 \qquad \text{und} \qquad Pos2 = L_2(M_2) + A_2 M_1$$

Somit sind hier nur zwei Interpolationsrechnungen eines Basiskennfeldes erforderlich.

**Patentansprüche**

1. Verfahren zum Ansteuern einer Doppelkupplung mit zwei Kupplungen mit jeweils einem Basiskennfeld, das einer Aktorposition ein Kupplungsmoment zuordnet, und eines Parallelschaltgetriebes, wobei ein Übersprechen der Ansteuerung der Kupplungen durch eine Momentenbeeinflussung berücksichtigt wird, **dadurch gekennzeichnet, dass** zum Ansteuern der Kupplungen für jede Kupplung jeweils das Basiskennfeld abhängig vom Kupplungsmoment der anderen Kupplung erstellt wird.

2. Verfahren nach Anspruch 1, **dadurch gekennzeichnet, dass** bei jedem Basiskennfeld mehrere Stützstellen im Verlauf des Kupplungsmomentes über der Aktorposition einer Kupplung verwendet werden, um über eine lineare Interpolation eine Funktionen zu ermitteln, mit der aus einer vorgegebenen Aktorposition Kupplungsmomente berechnet werden und mit der aus einem geforderten Moment die erforderliche Aktorposition bestimmt wird.

3. Verfahren nach Anspruch 1 oder 2, **dadurch gekennzeichnet, dass** jedes Basiskennfeld während des Anfahrens und/oder während der Synchronisationsphase bei Schaltungen adaptiert wird.

4. Verfahren nach einem der vorangehenden Ansprüche, **dadurch gekennzeichnet, dass** Kupplungseigenschaften der Kupplungen durch unterschiedliche Parameter, wie Reibzahlveränderung, Verschleiß und/oder Nachstellung berücksichtig werden.

5. Verfahren nach Anspruch 1, **dadurch gekennzeichnet, dass** mehrere ÜbersprechParameter angepasst werden.

6. Verfahren nach Anspruch 5, **dadurch gekennzeichnet, dass** zum Ermitteln der Parameter die berechneten Werte für die Kupplungsmomente und die realen, gemessenen Kupplungsmomente verglichen werden.

7. Verfahren nach Anspruch 5 oder 6, **dadurch gekennzeichnet, dass** die Parameter bei einer asymmetrischen Belastung der Kupplungen bestimmt werden.

8. Verfahren nach einem der Ansprüche 5 bis 7, **dadurch gekennzeichnet, dass** die Parameter der Kupplungen im schleifenden Zustand ermittelt werden.

9. Verfahren nach einem der Ansprüche 5 bis 8, dass die Parameter $\alpha_0$ und $\beta_0$ nach folgenden Gleichungen bestimmt werden:

$$\alpha_0 = \frac{M_{RO1}(Pos1) - M_{R1}(Pos1, Pos2)}{M_{RO2}(Pos2)}$$

$$\beta_0 = \frac{M_{RO2}(Pos2) - M_{R2}(Pos1, Pos2)}{M_{Ro1}(Pos1)}$$

10. Verfahren nach einem der Ansprüche 5 bis 9, **dadurch gekennzeichnet, dass** schleifenden Kupplungen nur eine Summe von Parametern $\alpha_1$ und $\beta_1$ wie folgt bestimmt wird:

$$\alpha_1 + \beta_1 = \frac{(1-\beta_0)M_{Ro1}(Pos1) + (1-\alpha_0)M_{RO2}(Pos2) - (M_{R1} + M_{R2})}{M_{Ro1}(Pos1)M_{RO2}(Pos2)}$$

11. Verfahren nach einem der Ansprüche 5 bis 10, **dadurch gekennzeichnet, dass** zumindest ein Parameter adaptiert wird.

12. Verfahren nach Anspruch 11, **dadurch gekennzeichnet, dass** bei schlupfenden Kupplungen das Summenmoment bei bekanntem Motormoment aus der Drehzahländerung des Motors ermittelt wird.

13. Verfahren nach einem der Ansprüche 5 bis 12, **dadurch gekennzeichnet, dass** die Aktorpositionen aus den Sollmomenten berechnet werden

14. Verfahren nach Anspruch 13, **dadurch gekennzeichnet, dass** in einem ersten Schritt die Basismomente berechnet werden, aus denen über die inversen Basiskennfelder die Positionen ermittelt werden.

15. Verfahren nach einem der Ansprüche 1, **dadurch gekennzeichnet, dass** ein Übersprechen bei der Ansteuerung der Kupplungen durch eine geeignete Tastpunktverschiebung berücksichtigt wird.

16. Verfahren nach Anspruch 15, **dadurch gekennzeichnet, dass** das Basiskennfeld der jeweiligen Kupplung verschoben wird.

17. Verfahren nach Anspruch 16, **dadurch gekennzeichnet, dass** die Verschiebung des jeweiligen Basiskennfeldes proportional zum Kupplungsmoment an der jeweils anderen Kupplung durchgeführt wird.

18. Verfahren nach einem der Ansprüche 15 bis 17**, dadurch gekennzeichnet, dass** Proportionalitätsparameter $A_1$ und $A_2$ für eine Adaption des Kennfeldes nach folgenden Gleichungen ermittelt werden:

$$A_1 = \frac{\Delta TP_1}{M_{R2}} \quad \text{und} \quad A_2 = \frac{\Delta TP_2}{M_{R1}}$$

19. Verfahren nach einem der Ansprüche 15 bis 18, **dadurch gekennzeichnet, dass** bei einer Tastpunktadaption im Leerlauf des Motors, wenn in beiden Teilgetrieben des Parallelschaltgetriebes ein Gang eingelegt ist, zunächst die Kupplung des ersten Teilgetriebes bis zu einem hohen Reibmoment geschlossen wird und dass, wenn die Kupplung des zweiten Teilgetriebes geschlossen wird, das Getriebe vorgespannt wird, sodass der Tastpunkt anhand des Leerlaufmoments des Motors ermittelt wird.

20. Verfahren nach einem der Ansprüche 15 bis 19, **dadurch gekennzeichnet, dass** zur Ermittlung einer Tastpunktverschiebung zumindest ein Eingangswellendrehzahlsensor verwendet wird.

21. Verfahren nach Anspruch 20, **dadurch gekennzeichnet, dass** während des Fahrzustandes mit einem ersten Teilgetriebe des Parallelschaltgetriebes ein Moment übertragen wird und dass ein zweites Teilgetriebe in Neutral geschaltet wird, wobei beim Schließen der Kupplung des zweiten Teilgetriebes an dem Eingangswellendrehzahlsensor das Schließen der Kupplung erkannt wird und die Verschiebung des Tastpunktes ermittelt wird.

22. Verfahren nach einem der Ansprüche 15 bis 21, **dadurch gekennzeichnet, dass** zur Ermittlung einer Tastpunktverschiebung eine Schlupfregelung verwendet wird.

23. Verfahren nach Anspruch 22, **dadurch gekennzeichnet, dass** während des Fahrzustandes mit einem ersten Teilgetriebe des Parallelschaltgetriebes ein Moment übertragen wird und dass ein zweites Teilgetriebe in Neutral geschaltet wird, wobei die zweite Kupplung geschlossen und eine Tastpunktverschiebung durch die Schlupfregelung ausgeglichen wird, sodass die vorliegende Verschiebung ermittelt wird.

24. Verfahren nach einem Ansprüche 15 bis 23, **dadurch gekennzeichnet, dass** beim Übersprechen durch die Tastpunktverschiebung zumindest ein Reibwert einer Kupplung berücksichtigt wird.

25. Parallelschaltgetriebe, für ein Fahrzeug mit einer Doppelkupplung zum Durchführen des Verfahrens nach einem der Ansprüche 1 bis 24, **dadurch gekennzeichnet, dass** zumindest eine Ansteuereinrichtung vorgesehen ist, welche zum Ansteuern der Kupplungen für jede Kupplung jeweils das Basiskennfeld abhängig vom Kupplungsmoment der anderen Kupplung erstellt..

**Claims**

1. Method for activating a double clutch with two clutches, each having a basic characteristic map, which assigns a clutch torque to an actuator position, and for activating a parallel gear-shift transmission, crosstalk in the activation of the clutches being taken into account by the torque being influenced, **characterized in that,** to activate the clutches, in each case the basic characteristic map is set up for each clutch as a function of the clutch torque of the other clutch.

2. Method according to Claim 1, **characterized in that,** in each basic characteristic map, a plurality of support points are used in the profile of the clutch torque against the actuator position of a clutch, in order via a linear interpolation to determine a function by means of which clutch torques are calculated from a predeterminable actuator position and by means of which the required actuator position is determined from a demanded torque.

3. Method according to Claim 1 or 2, **characterized in that** each basic characteristic map is adapted during starting and/or during the synchronizing phase in the case of gear shifts.

4. Method according to one of the preceding claims, **characterized in that** clutch properties of the clutches are taken into account by means of different parameters, such as a variation in coefficient of friction, wear and/or readjustment.

5. Method according to Claim 1, **characterized in that** a plurality of crosstalk parameters are adapted.

6. Method according to Claim 5, **characterized in that,** to determine the parameters, the calculated values for the clutch torques and the real measured clutch torques are compared.

7. Method according to Claim 5 or 6, **characterized in that** the parameters are determined in the event of an asymmetric load on the clutches.

8. Method according to one of Claims 5 to 7, **characterized in that** the parameters of the clutches are determined in the slipping state.

9. Method according to one of Claims 5 to 8, **characterized in that** the parameters $\alpha_0$ and $\beta_0$ are determined according to the following equations:

$$\alpha_0 = \frac{M_{RO1}(Pos1) - M_{R1}(Pos1, Pos2)}{M_{RO2}(Pos2)}$$

$$\beta_0 = \frac{M_{RO2}(Pos2) - M_{R2}(Pos1, Pos2)}{M_{Ro1}(Pos1)}$$

10. Method according to one of Claims 5 to 9, **characterized in that,** in the case of slipping clutches, only a sum of parameters $\alpha_1$ and $\beta_1$ is determined as follows:

$$\alpha_1 + \beta_1 = \frac{(1 - \beta_0)M_{Ro1}(Pos1) + (1 - \alpha_0)M_{RO2}(Pos2) - (M_{R1} + M_{R2})}{M_{Ro1}(Pos1)M_{RO2}(Pos2)}$$

11. Method according to one of Claims 5 to 10, **characterized in that** at least one parameter is adapted.

12. Method according to Claim 11, **characterized in that,** in the case of slipping clutches, with the engine torque being known, the sum torque is determined from the change in rotational speed of the engine.

**13.** Method according to one of Claims 5 to 12, **characterized in that** the actuator positions are calculated from the desired torques.

**14.** Method according to Claim 13, **characterized in that,** in a first step, the basic torques are calculated, from which the positions are determined via the inverse basic characteristic maps.

**15.** Method according to one of Claims 1, **characterized in that** crosstalk in the activation of the clutches is taken into account by means of a suitable measuring-point shift.

**16.** Method according to Claim 15, **characterized in that** the basic characteristic map of the respective clutch is shifted.

**17.** Method according to Claim 16, **characterized in that** the shift of the respective basic characteristic map is carried out in proportion to the clutch torque on the other clutch in each case.

**18.** Method according to one of Claims 15 to 17, **characterized in that** proportionality parameters $A_1$ and $A_2$ for adapting the characteristic map are determined according to the following equations:

$$A_1 = \frac{\Delta TP_1}{M_{R2}} \ and \ A_2 = \frac{\Delta TP_2}{M_{R1}}$$

**19.** Method according to one of Claims 15 to 18, **characterized in that,** in the case of measuring-point adaptation during the idling of the engine, when a gear is selected in both part-transmissions of the parallel gear-shift transmission, first the clutch of the first part-transmission is closed up to a high moment of friction, and **in that**, when the clutch of the second part-transmission is closed, the transmission is prestressed, so that the measuring point is determined by means of the idling torque of the engine.

**20.** Method according to one of Claims 15 to 19, **characterized in that** at least one input-shaft rotational-speed sensor is used for determining a measuring-point shift.

**21.** Method according to Claim 20, **characterized in that,** during the driving state, a torque is transmitted by means of a first part-transmission of the parallel gear-shift transmission, and **in that** a second part-transmission is shifted into neutral, while, during the closing of the clutch of the second part-transmission, the closing of the clutch is detected at the input-shaft rotational-speed sensor and the shift of the measuring point is determined.

**22.** Method according to one of Claims 15 to 21, **characterized in that** slip control is used for determining a measuring-point shift.

**23.** Method according to Claim 22, **characterized in that,** during the driving state, a torque is transmitted by means of a first part-transmission of the parallel gear-shift transmission, and **in that** a second part-transmission is shifted into neutral, while the second clutch is closed and a measuring-point shift is compensated by means of the slip control, so that the prevailing shift is determined.

**24.** Method according to one of Claims 15 to 23, **characterized in that,** in the event of crosstalk, at least one coefficient of friction of a clutch is taken into account by means of the measuring-point shift.

**25.** Parallel gear-shift transmission for a vehicle with a double clutch for carrying out the method according to one of Claims 1 to 24, **characterized in that** at least one activation device is provided, which, to activate the clutches, in each case sets up the basic characteristic map for each clutch as a function of the clutch torque of the other clutch.

**Revendications**

**1.** Procédé de commande d'un double accouplement comprenant deux accouplements, présentant chacun un diagramme caractéristique de base qui associe un couple d'accouplement à une position d'un actionneur, et d'une boîte de vitesses parallèle, une diaphonie de la commande des accouplements par l'influence d'un couple étant prise en compte, **caractérisé en ce que** pour commander les accouplements, le diagramme caractéristique de base est établi pour chaque accouplement à chaque fois en fonction du couple d'accouplement de l'autre accouplement.

2. Procédé selon la revendication 1, **caractérisé en ce que** pour chaque diagramme caractéristique de base sont utilisés plusieurs points de référence dans la courbe du couple d'accouplement en fonction de la position de l'actionneur d'un accouplement afin de déterminer par le biais d'une interpolation linéaire une fonction avec laquelle les couples d'accouplement sont calculés à partir d'une position prédéfinie de l'actionneur et avec laquelle la position requise de l'actionneur est déterminée à partir du couple exigé.

3. Procédé selon la revendication 1 ou 2, **caractérisé en ce que** chaque diagramme caractéristique de base est adapté pendant le démarrage et/ou pendant la phase de synchronisation lors des changements de rapport.

4. Procédé selon l'une des revendications précédentes, **caractérisé en ce que** les caractéristiques d'accouplement des accouplements sont prises en compte par différents paramètres tels que le changement du coefficient de frottement, l'usure et/ou le rattrapage.

5. Procédé selon la revendication 1, **caractérisé en ce que** plusieurs paramètres de diaphonie sont adaptés.

6. Procédé selon la revendication 5, **caractérisé en ce que** pour déterminer les paramètres, les valeurs calculées des couples d'accouplement sont comparées avec les couples d'accouplement réels mesurés.

7. Procédé selon la revendication 5 ou 6, **caractérisé en ce que** les paramètres sont déterminés avec une charge asymétrique des accouplements.

8. Procédé selon l'une des revendications 5 à 7, **caractérisé en ce que** les paramètres des accouplements sont déterminés en situation de patinage.

9. Procédé selon l'une des revendications 5 à 8, **caractérisé en ce que** les paramètres $\alpha_0$ et $\beta_0$ sont déterminés d'après les équations suivantes :

$$\alpha_0 = \frac{M_{RO1}(Pos1) - M_{R1}(Pos1, Pos2)}{M_{RO2}(Pos2)}$$

$$\beta_0 = \frac{M_{RO2}(Pos2) - M_{R2}(Pos1, Pos2)}{M_{RO1}(Pos1)}$$

10. Procédé selon l'une des revendications 5 à 9, **caractérisé en ce que** lorsque les accouplements patinent, seule une somme des paramètres $a_1$ et $\beta_1$ est déterminée comme suit :

$$\alpha_1 + \beta_1 = \frac{(1-\beta_0)M_{RO1}(Pos1) + (1-\alpha_0)M_{RO2}(Pos2) - (M_{R1} + M_{R2})}{M_{RO1}(Pos1)M_{RO2}(Pos2)}$$

11. Procédé selon l'une des revendications 5 à 10, **caractérisé en ce qu'**au moins un paramètre est adapté.

12. Procédé selon la revendication 11, **caractérisé en ce que** lorsque les accouplements patinent, le couple total est déterminé à partir du changement de vitesse de rotation du moteur en connaissant le couple du moteur.

13. Procédé selon l'une des revendications 5 à 12, **caractérisé en ce que** les positions des actionneurs sont calculées à partir des couples de consigne.

14. Procédé selon la revendication 13, **caractérisé en ce que** dans une première étape sont calculés les couples de base et les positions sont déterminées à partir de ceux-ci par le biais du diagramme caractéristique de base inversé.

**15.** Procédé selon la revendication 1, **caractérisé en ce qu'**une diaphonie lors de la commande des accouplements est prise en compte par un décalage approprié du point d'échantillonnage.

**16.** Procédé selon la revendication 15, **caractérisé en ce que** le diagramme caractéristique de base de l'accouplement correspondant est décalé.

**17.** Procédé selon la revendication 16, **caractérisé en ce que** le décalage du diagramme caractéristique de base correspondant est effectué proportionnellement au couple d'accouplement sur l'autre accouplement respectif.

**18.** Procédé selon l'une des revendications 15 à 17, **caractérisé en ce que** les paramètres de proportionnalité $A_1$ et $A_2$ pour une adaptation du diagramme caractéristique sont déterminés selon les équations suivantes :

$$A_1 = \frac{\Delta TP_1}{M_{R2}} \ et \ A2 = \frac{\Delta TP_2}{M_{R1}}$$

**19.** Procédé selon l'une des revendications 15 à 18, **caractérisé en ce que** lors d'une adaptation du point d'échantillonnage au ralenti du moteur, si un rapport est engagé dans les deux boîtes de vitesses partielles de la boîte de vitesses parallèle, l'accouplement de la première boîte de vitesses partielle est fermé en premier jusqu'à un couple de frottement élevé et que lorsque l'accouplement de la deuxième boîte de vitesses partielle est fermé, la boîte de vitesses est précontrainte de sorte que le point d'échantillonnage soit déterminé au moyen du couple de ralenti du moteur.

**20.** Procédé selon l'une des revendications 15 à 19, **caractérisé en ce qu'**au moins un capteur de vitesse de rotation de l'arbre d'entrée est utilisé pour déterminer un décalage du point d'échantillonnage.

**21.** Procédé selon la revendication 20, **caractérisé en ce que** pendant le déplacement, un couple est transmis avec une première boîte de vitesses partielle de la boîte de vitesses parallèle et qu'une deuxième boîte de vitesses partielle est mise au point mort, la fermeture de l'accouplement étant détectée au niveau du capteur de vitesse de rotation de l'arbre d'entrée lors de la fermeture de l'accouplement de la deuxième boîte de vitesses partielle et le décalage du point d'échantillonnage étant déterminé.

**22.** Procédé selon l'une des revendications 15 à 21, **caractérisé en ce qu'**une régulation du patinage est utilisée pour déterminer un décalage du point d'échantillonnage.

**23.** Procédé selon la revendication 22, **caractérisé en ce que** pendant le déplacement, un couple est transmis avec une première boîte de vitesses partielle de la boîte de vitesses parallèle et qu'une deuxième boîte de vitesses partielle est mise au point mort, le deuxième accouplement étant fermé et un décalage du point d'échantillonnage étant compensé par la régulation du patinage de manière à déterminer le décalage en présence.

**24.** Procédé selon l'une des revendications 15 à 23, **caractérisé en ce qu'**au moins un coefficient de frottement d'un accouplement est pris en compte en cas de diaphonie du fait du décalage du point d'échantillonnage.

**25.** Boîte de vitesses parallèle pour un véhicule équipé d'un double accouplement destinée à mettre en oeuvre le procédé selon l'une des revendications 1 à 24, **caractérisée en ce qu'**il est prévu au moins un dispositif de commande qui, pour commander les accouplements, établit respectivement le diagramme caractéristique de base pour chaque accouplement en fonction du couple d'accouplement de l'autre accouplement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5407401 A
- EP 1067008 A2